# EUROPEAN PATENT SPECIFICATION

(11) **EP 3 130 394 B1**
(45) Date of publication and mention of the grant of the patent: **25.10.2023**
(21) Application number: 16170377.2
(22) Date of filing: 19.05.2016
(51) Int. Cl.: B01D 69/02, B01D 67/00, B01D 71/36

(54) **COATED PTFE MEMBRANE**
BESCHICHTETE PTFE-MEMBRAN
MEMBRANE DE PTFE REVÊTUE

(30) Priority: 31.07.2015 US 201514814996
(43) Date of publication of application: 15.02.2017
(73) Proprietor: Pall Corporation, Port Washington, NY 11050 (US)
(72) Inventor: SINGH, Amarnauth, Selden, NY New York 11784 (US); SITTERER, Andrew T., Massapequa, NY New York 11758 (US)
(74) Representative: Hoeger, Stellrecht & Partner Patentanwälte mbB

(56) References cited:
- WO-A1-95/24976
- WO-A2-89/12490
- US-A- 4 470 859
- TAKUYA NAGAFUCHI ET AL: "Particle Retention Mechanism of Filter in High Temperature Chemical", DIFFUSION AND DEFECT DATA. PART B: SOLID STATE PHENOMENA, vol. 145-146, 1 January 2009 (2009-01-01), pages 69-72, XP055330201, CH ISSN: 1012-0394, DOI: 10.4028/www.scientific.net/SSP.145-146.69

## Description

### BACKGROUND OF THE INVENTION

PTFE membranes, particularly expanded PTFE (ePTFE) membranes, are used in a variety of liquid and gas filtration applications, including applications that involve treating challenging fluids such as corrosive or chemically active liquids. However, there is a need for porous PTFE membranes that exhibit metal scavenging or metal removal efficiency while providing low flow resistance.

These and other advantages of the present invention will be apparent from the description as set forth below.

US patent 4,470,859 discloses a method for forming a hydrophilic coating upon a porous substrate such as a reticulate electrode or a filter from a dispersed, perfluorocarbon copolymer. The perfluorocarbon copolymer is dispersed in a solvating medium, a substantial portion, but not necessarily all of the perfluorocarbon being solvated. The dispersion is applied to the substrate and the dispersion medium is removed.

Takuya Nagafuchi et al. describe in the article "Particle retention mechanism of filter in high temperature chemical", Solid State Phenomena Vols. 145-146 (2009), pages 69-72, the possibility of a control of particles measured in the tens of nanometers in the field of semiconductor manufacturing. The article describes the influence of temperature and bubbles on the particle removal efficiency of a fluoroplastic filter. The filtering effect is explained by the sieving capture on the one hand and the Van der Waals interactions between the filter material and the particles on the other hand.

### BRIEF SUMMARY OF THE INVENTION

The invention relates to a method for filtering a fluid as defined in claim 1. The invention further relates to a porous PTFE membrane comprising a porous PTFE substrate as set out in claim 4. Furthermore, the invention relates to a method of making a metal-removing membrane as set out in claim 5.

An embodiment of the invention provides a porous PTFE membrane comprising a porous PTFE substrate having a non-crosslinked coating comprising perfluorosulfonic acid (PFSA) polymer, wherein the membrane has a CWST of at least about 30 dynes/cm (about 30 × 10⁻⁵ N/cm).

In another embodiment, a method for filtering a metal-containing fluid is provided, the method comprising passing a metal-containing fluid through a porous PTFE membrane comprising a porous PTFE substrate having a non-crosslinked coating comprising perfluorosulfonic acid (PFSA) polymer, wherein the membrane has a CWST of at least about 30 dynes/cm (about 30 × 10⁻⁵ N/cm) and removes metal from the fluid.

In another embodiment, a method for filtering a sulfuric perioxide mixture (SPM) fluid is provided, the method comprising passing the fluid through a porous PTFE membrane comprising a porous PTFE substrate having a non-crosslinked coating comprising perfluorosulfonic acid (PFSA) polymer, wherein the membrane has a CWST of at least about 30 dynes/cm (about 30 × 10⁻⁵ N/cm) and removes particles from the fluid.

Devices including the membranes, and methods of making the membranes, are also provided in accordance with embodiments of the invention.

### BRIEF DESCRIPTION OF THE SEVERAL VIEWS OF THE DRAWING(S)

Figure 1 is a graph showing metal absorption for various embodiments of PFSA coated PTFE membranes according to the present invention, compared to an untreated PTFE membrane, and a commercially available UV treated PTFE membrane.
Figure 2 is a graph showing metal absorption for various embodiments of PFSA coated PTFE membranes according to the present invention, compared to an untreated PTFE membrane, showing the absorption is due to the coating, rather than sieving.

### DETAILED DESCRIPTION OF THE INVENTION

In accordance with the present invention, a porous PTFE membrane comprises a porous PTFE substrate having a non-crosslinked coating comprising perfluorosulfonic acid (PFSA) polymer, wherein the membrane has a CWST of at least about 30 dynes/cm (about 30 × 10⁻⁵ N/cm).

A method for filtering a metal-containing fluid according to an embodiment of the invention comprises passing a metal-containing fluid through a porous PTFE membrane comprising a porous PTFE substrate having a non-crosslinked coating comprising perfluorosulfonic acid (PFSA) polymer, wherein the membrane has a CWST of at least about 30 dynes/cm (about 30 × 10⁻⁵ N/cm) and removes metal from the fluid (e.g., removing Group 2 metals (e.g., Mg and/or Ca), polyvalent metals and/or transition metals (e.g., Cr, Mn, Fe, and/or Ni) from the metal-containing fluid).

In another embodiment, a method for filtering a sulfuric perioxide mixture (SPM) fluid is provided, the method comprising passing the fluid through a porous PTFE membrane comprising a porous PTFE substrate having a non-crosslinked coating comprising perfluorosulfonic acid (PFSA) polymer, wherein the membrane has a CWST of at least about 30 dynes/cm (about 30 × 10⁻⁵ N/cm) and removes particles (such as silica-containing particles) from the fluid.

In an embodiment, a method of making a metal-removing membrane is provided, the method comprising coating a porous PTFE substrate with a coating comprising perfluorosulfonic acid (PFSA) polymer, as set out in claim 5.

The method comprises coating a porous PTFE substrate with a coating comprising perfluorosulfonic acid (PFSA) polymer, wherein a cross-linking agent is not used, and the coating is prepared at room temperature; and curing the coating at a temperature from about 25 °C to about 200 °C.

Advantageously, in contrast with the preparation of membranes for some applications wherein a metal agent is used, and the metal agent is removed by a post washing process (e.g., using HCl) to meet standards (e.g., in the microelectronics industry), membranes according to the invention can be prepared with a metal agent free coating. Additionally, membranes can be prepared according to the invention in a manufacturing friendly process, e.g., the preparation can be easily incorporated into existing manufacturing processes, resulting in increased speed of preparation.

The coated porous PTFE membranes according the invention advantageously provide a combination of high metal scavenging or metal removal efficiency and low flow resistance, while remaining wet in the fluid being processed (i.e., the membranes are non-dewetting in the process fluid) and are useful in a wide range of liquid, and gas (including air) filtration applications, including sterile filtration applications. Exemplary applications include for example, diagnostic applications (including, for example, sample preparation and/or diagnostic lateral flow devices), ink jet applications, lithography, e.g., as replacement for HD/UHMW PE based media, filtering fluids for the pharmaceutical industry, metal removal, production of ultrapure water, treatment of industrial and surface waters, filtering fluids for medical applications (including for home and/or for patient use, e.g., intravenous applications, also including, for example, filtering biological fluids such as blood (e.g., virus removal)), filtering fluids for the electronics industry (e.g., filtering photoresist fluids in the microelectronics industry and hot sulfuric perioxide mixture (SPM) fluids), filtering fluids for the food and beverage industry, beer filtration, clarification, filtering antibody- and/or protein-containing fluids, filtering nucleic acid-containing fluids, cell detection (including *in situ*)*,* cell harvesting, and/or filtering cell culture fluids. Alternatively, or additionally, porous membranes according to embodiments of the invention can be used to filter air and/or gas and/or can be used for venting applications (e.g., allowing air and/or gas, but not liquid, to pass therethrough). Porous membranes according to embodiments of the inventions can be used in a variety of devices, including surgical devices and products, such as, for example, ophthalmic surgical products. The inventive membranes are dimensionally stable. In some embodiments, the porous PTFE membranes can be utilized individually, e.g., as unsupported membranes, and in other embodiments, the porous PTFE membranes can be combined with other porous elements and/or another component, to provide, for example, an article such as a composite, a filter element, and/or a filter.

One example of a suitable PFSA polymer dispersion for use in preparing a coating is available from Solvay Specialty Polymers (Borger, Texas) as Aquivion^{®} PFSA (e.g., AQUIVION PFSA D83-24B, AQUIVION PFSA D83-06A, and AQUIVION PFSA D79-20BS), which is based on a Short Side Chain (SSC) copolymer of Tetrafluoroethylene and a Sulfonyl Fluoride Vinyl Ether (SFVE) F2C=CF-O-CF2-CF2-SO2F. The ionomer dispersions contain its sulfonic acid form. Another example of a suitable PFSA polymer dispersion is a DuPont^{™} Nafion^{®} PFSA polymer dispersion.

In preparing the coating, the concentration of PFSA in the coating solution can be varied for different applications. The concentration is in the range of from about 0.1% to about 3%, preferably, in the range of from about 0.12% to about 2.2%.

A variety of porous PTFE substrates and membranes (including commercially available substrates and membranes) can be coated in accordance with the invention.

Membranes and substrates can be coated as known in the art, for example, but not limited to, dip coating or spraying.

The membranes can have any suitable pore structure falling under the scope of the appended claims e.g., a pore size (for example, as evidenced by bubble point, or by K_{L} as described in, for example, U.S. Patent 4,340,479, or evidenced by capillary condensation flow porometry), a mean flow pore (MFP) size (e.g., when characterized using a porometer, for example, a Porvair Porometer (Porvair pic, Norfolk, UK), or a porometer available under the trademark POROLUX (Porometer.com; Belgium)), a pore rating, a pore diameter (e.g., when characterized using the modified OSU F2 test as described in, for example, U.S. Patent 4,925,572), or removal rating media. The pore structure used depends on the size of the particles to be utilized, the composition of the fluid to be treated, and the desired effluent level of the treated fluid.

The coated porous PTFE membranes according to the invention have pores of diameter in the range of from 1 nm to 100 nm.

Typically, the coated membrane has a thickness in the range of from about 0.2 to about 5.0 mils (about 5 to about 127 microns), preferably, in the range of from about 0.5 to about 1.0 mils (about 13 to about 25 microns), though membranes can be thicker or thinner than those values.

The porous membrane has a critical wetting surface tension (CWST, as defined in, for example, U.S. Patent 4,925,572) of at least about 30 dynes/cm (about 30 x 10⁻⁵ N/cm). CWST can be measured by relying on a set of solutions of certain composition. Each solution has specific surface tension. The solution's surface tension ranges from 25 to 92 dynes/cm in small non-equivalent increments. To measure the membrane surface tension, the membrane is positioned on to top of white light table, one drop of a solution of certain surface tension is applied to the membrane surface and the time the drop takes to penetrate through the membrane and become bright white as an indication of light going through the membrane is recorded. Instant wetting is considered when the time the drop takes to penetrate the membrane is ≤ 10 seconds. If the time > 10 seconds, the solution is considered to partially wet the membrane. The CWST can be selected as is known in the art, e.g., as additionally disclosed in, for example, U.S. Patents 5,152,905, 5,443,743, 5,472,621, and 6,074,869.

Typically, the coated PTFE membrane has a CWST of at least about 30 dynes/cm (about 30 x 10⁻⁵ N/cm), and in some embodiments, at least about 35 dynes/cm (about 35 x 10⁻⁵ N/cm). For example, the coated PTFE membrane may have a CWST in the range of from about 30 dynes/cm (about 30 × 10⁻⁵ N/cm) to about 40 dynes/cm (about 40 × 10⁻⁵ N/cm), or more.

An article such as a filter, filter element and/or composite including the coated porous PTFE membrane can include additional elements, layers, or components, that can have different structures and/or functions, e.g., at least one of any one or more of the following: prefiltration, support, drainage, spacing and cushioning. Illustratively, the filter can also include at least one additional element such as a mesh and/or a screen.

In accordance with embodiments of the invention, the membrane can have a variety of configurations, including planar, pleated, spiral, and/or hollow cylindrical.

The membrane, filter element, composite and/or filter is typically disposed in a housing comprising at least one inlet and at least one outlet and defining at least one fluid flow path between the inlet and the outlet, wherein the membrane is across the fluid flow path, to provide a filter device. Preferably, for crossflow applications, the membrane, composite and/or filter is disposed in a housing comprising at least one inlet and at least two outlets and defining at least a first fluid flow path between the inlet and the first outlet, and a second fluid flow path between the inlet and the second outlet, wherein the membrane is across the first fluid flow path, to provide a filter device. The filter device may be sterilizable. Any housing of suitable shape and providing at least one inlet and at least one outlet may be employed.

The housing can be fabricated from any suitable rigid impervious material, including any impervious thermoplastic material, which is compatible with the fluid being processed. For example, the housing can be fabricated from a metal, such as stainless steel, or from a polymer. In an example, the housing is a polymer, such as an acrylic, polypropylene, polystyrene, or a polycarbonated resin.

### EXAMPLE 1

This example demonstrates a method of preparing a membrane according to an embodiment of the invention.

A 0.25% PFSA solution (AQUIVION PFSA 24; D83-24B Solvay Plastics) is prepared in a methanol-water medium to obtain a polymer solution. A commercially available PTFE substrate ((membrane) Sumitomo Electric Fine Polymer, Inc., nominal pore size 50 nm) is dip-coated with the polymer solution until fully wet, removed from the solution and drained for about 2 minutes, and restrained and dried at 150 °C for 10 minutes followed by washing in room temperature DI water for 12 hours, and tested.

The results (compared to an untreated (control) PTFE membrane and a commercially available UV treated PTFE membrane) are as follows:

| Media | Untreated PTFE | Commercially available UV treated PTFE | PFSA coated PTFE |
|---|---|---|---|
| CWST (dynes/cm) | 27 | 32 | 35 |
| Flow (L/min/ft²/psid) | 1.07 | 1.16 | 0.88 |
| IPA K_{L}, Water K_{L} (psi) | 46.7, NA | 48.2, 51.5 | 57.3, 35.5 |
| SPM CWST (dynes/cm) | 27 | 32 | 35 |

This example shows CWST is increased (thus, the membrane is non-dewetting), with little reduction in flow, in accordance with an embodiment of the invention.

### EXAMPLE 2

This example shows the metal removal efficiencies for two PFSA coated PTFE membranes (prepared with different concentrations of PFSA) according to embodiments of the invention, compared to an untreated (control) PTFE membrane, and a commercially available UV treated PTFE membrane.

Two PFSA coated PTFE membranes are prepared as generally described in Example 1, wherein one membrane is dip-coated in a 0.25% PFSA solution (AQUIVION PFSA D83-24B) prepared in a methanol-water medium, and another membrane is dip-coated in a 0.5% PFSA solution (AQUIVION PFSA D83-24B) prepared in a methanol-water medium.

The fluid samples separately contain the following metals: Li, Na, K (Group 1 metals); Mg, Ca (Group 2 metals); Al, Pb (Group 3 metals), and Cr, Mo, Mn, Fe, Ni, Cu, Zn (Transition metals).

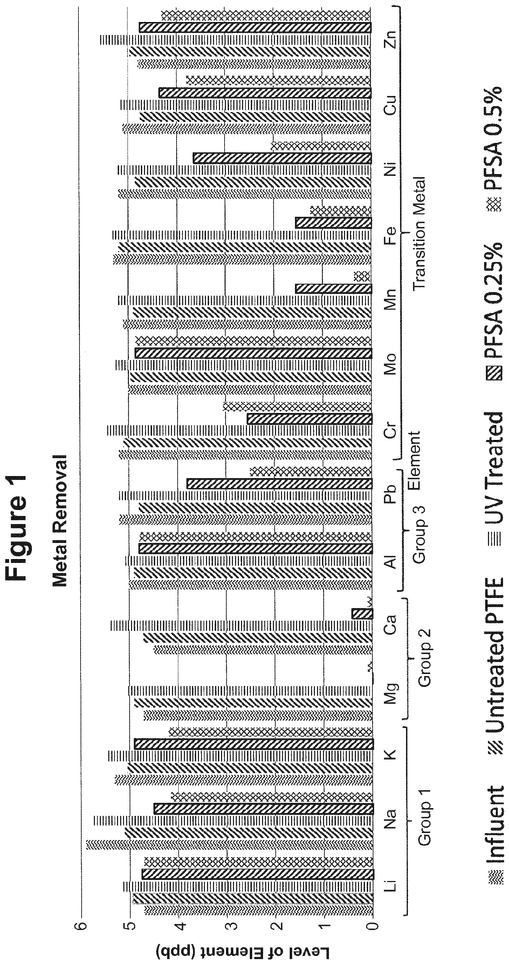

As shown in Figure 1, embodiments of membranes according to the invention, as compared to an untreated membrane and a commercially available UV treated membrane, efficiently remove various Group 2 metals and various transition metals.

### EXAMPLE 3

This example shows the metal removal efficiencies for two PFSA coated PTFE membranes (prepared with different concentrations of PFSA) according to embodiments of the invention.

Two PFSA coated PTFE membranes are prepared as generally described in Example 1, wherein one membrane is dip-coated in a 0.25% PFSA solution (AQUIVION PFSA D83-24B) prepared in a methanol-water medium, and another membrane is dip-coated in a 0.5% PFSA solution (AQUIVION PFSA D83-24B) prepared in a methanol-water medium.

The fluid samples separately contain the following metals: Li, Na, K (Group 1 metals); Mg, Ca (Group 2 metals); Al, Pb (Group 3 metals), and Cr, Mo, Mn, Fe, Ni, Cu, Zn (Transition metals).

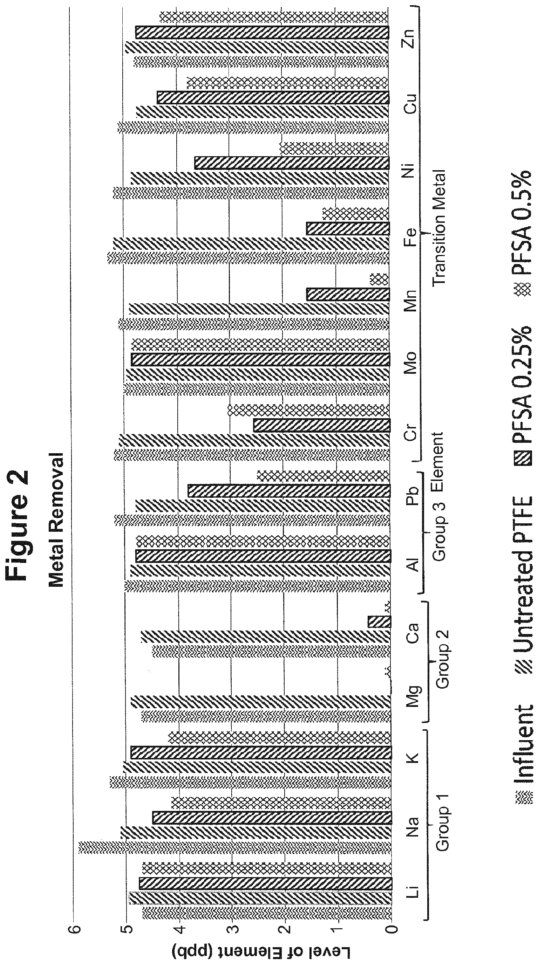

As shown in Figure 2, embodiments of membranes according to the invention as compared to an untreated membrane, more efficiently remove Group 2 metals, as well as various Group 3 and various transition metals, and showing the absorption is due to the coating, rather than sieving.

### EXAMPLE 4

This example shows the PFSA coating on the PTFE membrane is not cross-linked, as the coating is not removed by soaking in solvent.

PTFE membranes are weighed using a 7 digit balance.

Membranes are coated using a 24% w/w (stock) PFSA solution as generally described in Example 1 to provide non-cross-linked membranes.

Cross-linked membranes are prepared using a 24% w/w (stock) PFSA solution, wherein the membranes are dried at about 260 °C.

The dried control, non-cross-linked, and cross-linked membranes are weighed.

The membranes are soaked in the same solvent (methanol) solution used to make the coated membranes. One set of coated membranes is soaked in room temperature solvent solution, another set of coated membranes is soaked in 40 °C solvent solution. The use of 40 °C solvent solution helps speed up solvation of any byproduct.

The membranes are rinsed in fresh solvent 3 times, dried, and weighed again.

The weights of the control membrane and the non-cross-linked coated membrane soaked in room temperature and 40 °C solvent solutions are the same as the original weights, while the weights of the cross-linked coated membranes soaked in room temperature and 40 °C solvent solutions are less than the original weight, showing that the membrane is cross-linked.

## Claims

1. A method for filtering a fluid, the method comprising passing the fluid through a porous PTFE membrane comprising a porous PTFE substrate having a non-crosslinked coating comprising perfluorosulfonic acid (PFSA) polymer, wherein the non-crosslinked coating has been prepared using a coating solution comprising the PFSA polymer in an amount of 0.1 to 3 % by weight without a cross-linking agent and curing the at room temperature prepared coating on the porous PTFE substrate at a temperature from about 25 °C to about 200 °C, wherein the membrane has a CWST measured as described in the description of at least about 30 × 10⁻⁵ N/cm (30 dynes/cm) and a pore diameter measured as described in the description of 1 nm to 100 nm, said fluid to be filtered being selected from a metal-containing fluid and a sulfuric peroxide mixture (SPM) fluid, said membrane removing metal from the metal-containing fluid and particles from the sulfuric peroxide mixture (SPM) fluid, respectively.

2. The method of claim 1, wherein the fluid is a fluid used in the electronics industry.

3. The method of any one of claims 1 or 2, comprising removing Group 2 metals and/or transition metals from the fluid.

4. A porous PTFE membrane comprising a porous PTFE substrate having a non-crosslinked coating comprising perfluorosulfonic acid (PFSA) polymer, wherein the non-crosslinked coating has been prepared using a coating solution comprising the PFSA polymer in an amount of 0.1 to 3 % by weight without a cross-linking agent and curing the at room temperature prepared coating on the porous PTFE substrate at a temperature from about 25 °C to about 200 °C, wherein the membrane has a CWST measured as described in the description of at least 30 × 10⁻⁵ N/cm (30 dynes/cm ) and a pore diameter measured as described in the description of 1 nm to 100 nm.

5. A method of making a metal-removing membrane, the method comprising coating a porous PTFE substrate with a coating comprising perfluorosulfonic acid (PFSA) polymer; wherein the non-crosslinked coating has been prepared using a coating solution comprising the PFSA polymer in an amount of 0.1 to 3 % by weight without a cross-linking agent and, curing the at room temperature prepared coating on the porous PTFE substrate at a temperature from 25 °C to 200 °C.

## Patentansprüche

1. Verfahren zum Filtern eines Fluids, wobei das Verfahren umfasst: Durchleiten des Fluids durch eine poröse PTFE-Membran, welche ein poröses PTFE-Substrat umfasst, welches eine nicht-vernetzte Beschichtung aufweist, welche ein Perfluorsulfonsäure-(PFSA-)Polymer umfasst, wobei die nicht-vernetzte Beschichtung hergestellt ist mittels einer Beschichtungslösung, umfassend das PFSA-Polymer in einer Menge von 0,1 bis 3 Gew.-%, ohne ein Vernetzungsagens, und Härten der bei Raumtemperatur hergestellten Beschichtung auf dem porösen PTFE-Substrat bei einer Temperatur von ca. 25 °C bis ca. 200 °C, wobei die Membran einen CWST-Wert, gemessen wie in der Beschreibung definiert, von mindestens 30 × 10⁻⁵ N/cm (30 dyn/cm) und einen Porendurchmesser, gemessen wie in der Beschreibung definiert, von 1 nm bis 100 nm aufweist, wobei das zu filternde Fluid ausgewählt ist aus einem metallhaltigen Fluid und einem Schwefelperoxidmischungs-(SPM-)Fluid, wobei die Membran Metall aus dem metallhaltigen Fluid und Partikel aus dem Schwefelperoxidmischungs-(SPM-)Fluid entfernt.

2. Verfahren nach Anspruch 1, wobei das Fluid ein in der Elektronikindustrie verwendetes Fluid ist.

3. Verfahren nach einem der Ansprüche 1 oder 2, umfassend das Entfernen von Metallen der Gruppe 2 und/oder Übergangsmetallen aus dem Fluid.

4. Poröse PTFE-Membran, welche ein poröses PTFE-Substrat umfasst, welches eine nicht-vernetzte Beschichtung aufweist, welche ein Perfluorsulfonsäure-(PFSA-)Polymer umfasst, wobei die nicht-vernetzte Beschichtung hergestellt ist mittels einer Beschichtungslösung, umfassend das PFSA-Polymer in einer Menge von 0,1 bis 3 Gew.-%, ohne ein Vernetzungsagens, und Härten der bei Raumtemperatur hergestellten Beschichtung auf dem porösen PTFE-Substrat bei einer Temperatur von ca. 25 °C bis ca. 200 °C, wobei die Membran einen CWST-Wert, gemessen wie in der Beschreibung definiert, von mindestens 30 × 10⁻⁵ N/cm (30 dyn/cm) und einen Porendurchmesser, gemessen wie in der Beschreibung definiert, von 1 nm bis 100 nm aufweist.

5. Verfahren zur Herstellung einer metallentfernenden Membran, wobei das Verfahren umfasst: Beschichten eines porösen PTFE-Substrats mit einer Beschichtung, welche ein Perfluorsulfonsäure-(PFSA-)Polymer umfasst, wobei die nicht-vernetzte Beschichtung hergestellt ist mittels einer Beschichtungslösung, umfassend das PFSA-Polymer in einer Menge von 0,1 bis 3 Gew.-%, ohne ein Vernetzungsagens, und Härten der bei Raumtemperatur hergestellten Beschichtung auf dem porösen PTFE-Substrat bei einer Temperatur von 25 °C bis 200 °C.

## Revendications

1. Procédé pour la filtration d'un fluide, le procédé comprenant le passage du fluide à travers une membrane en PTFE poreuse comprenant un substrat en PTFE poreux ayant un revêtement non-réticulé comprenant un polymère d'acide perfluorosulfonique (PFSA), dans lequel le revêtement non-réticulé a été préparé en utilisant une solution de revêtement comprenant le polymère de PFSA dans une quantité de 0,1 à 3 % en masse sans agent de réticulation et en faisant durcir le revêtement préparé à température ambiante sur le substrat en PTFE poreux à une température d'environ 25°C à environ 200°C, dans lequel la membrane présente une CWST mesurée comme décrit dans la description d'au moins 30 × 10⁻⁵ N/cm (30 dynes/cm) et un diamètre de pore mesuré comme décrit dans la description de 1 nm à 100 nm, ledit fluide à filtrer étant choisi parmi un fluide contenant un métal et un fluide de mélange de peroxyde sulfurique (SPM), ladite membrane éliminant un métal du fluide contenant un métal et des particules du fluide de mélange de peroxyde sulfurique (SPM), respectivement.

2. Procédé selon la revendication 1, dans lequel le fluide est un fluide utilisé dans l'industrie électronique.

3. Procédé selon l'une quelconque des revendications 1 ou 2, comprenant l'élimination de métaux et/ou métaux de transition du groupe 2 du fluide.

4. Membrane en PTFE poreuse comprenant un substrat en PTFE poreux ayant un revêtement non-réticulé comprenant un polymère d'acide perfluorosulfonique (PFSA), dans laquelle le revêtement non-réticulé a été préparé en utilisant une solution de revêtement comprenant le polymère de PFSA dans une quantité de 0,1 à 3 % en masse sans agent de réticulation et en faisant durcir le revêtement préparé à température ambiante sur le substrat en PTFE poreux à une température d'environ 25°C à environ 200°C, dans laquelle la membrane présente une CWST mesurée comme décrit dans la description d'au moins 30 × 10⁻⁵ N/cm (30 dynes/cm) et un diamètre de pore mesuré comme décrit dans la description de 1 nm à 100 nm.

5. Procédé de fabrication d'une membrane éliminant un métal, le procédé comprenant le revêtement d'un substrat en PTFE poreux avec un revêtement comprenant un polymère d'acide perfluorosulfonique (PFSA), dans lequel le revêtement non-réticulé a été préparé en utilisant une solution de revêtement comprenant le polymère de PFSA dans une quantité de 0,1 à 3 % en masse sans agent de réticulation et, en faisant durcir le revêtement préparé à température ambiante sur le substrat en PTFE poreux à une température de 25°C à 200°C.
